# EUROPÄISCHE PATENTANMELDUNG

(11) **EP 4 089 405 A1**
(43) Veröffentlichungstag der Anmeldung: **16.11.2022**
(21) Anmeldenummer: 22166315.6
(22) Anmeldetag: 01.04.2022
(51) Int. Cl.: G01N 27/28, G01N 27/416, F16B 21/04, G01D 11/00, H01R 13/625

(54) **MESSANORDNUNG, MONTAGESYSTEM UND VERFAHREN ZUR DRUCKMESSUNG IN EINEM MESSVOLUMEN**

(30) Priorität: 12.05.2021 DE 102021112448
(71) Anmelder: Krohne Messtechnik GmbH, 47058 Duisburg (DE)
(72) Erfinder: Sievert, Dietmar, 46238 Bottrop (DE); Wilms, Marcus, 47057 Duisburg (DE)
(74) Vertreter: Gesthuysen Patentanwälte

(57) **Zusammenfassung**

Beschrieben und dargestellt ist eine Messanordnung (1) umfassend eine Sensoreinheit (3), ein Messvolumen (4) mit einer Wandung und ein Montagesystem (2), wobei die Sensoreinheit (3) mittels des Montagesystems (2) an dem Messvolumen (4) befestigt ist, wobei die Sensoreinheit (3) die Wandung des Messvolumens (4) durchdringt, sodass die Sensoreinheit (3) zumindest teilweise im Innenraum des Messvolumens (4) angeordnet ist, wobei das Montagesystem (2) wenigstens einen Montageadapter (6) und eine Überwurfkappe (7) umfasst, wobei der Montageadapter (6) fest in der Wandung des Messvolumens (4) angeordnet ist, wobei die Sensoreinheit (3) beweglich in dem Montageadapter (6) angeordnet ist, wobei die Überwurfkappe (7) mit der Sensoreinheit (3) verbunden ist, und wobei die Sensoreinheit (3) durch die Verbindung der Überwurfkappe (7) mit dem Montageadapter (6) in dem Montageadapter (6) gehalten wird. Zusätzlich ist wenigstens ein Zapfenelement (9) und wenigstens eine Ausnehmung (10) mit einer Führungskontur (11) zur Aufnahme und Führung des wenigstens einen Zapfenelementes (9) vorhanden, wobei die Position des Zapfenelementes (9) in der Führungskontur (11) durch wenigstens eine Drehbewegung der Überwurfkappe (7) und/oder durch wenigstens eine Steckbewegung der Überwurfkappe (7) in oder entgegen der Einsteckrichtung der Sensoreinheit (3) verstellbar ist, dass die Führungskontur (11) eine Bewegung der Sensoreinheit (3) mit der Überwurfkappe (7) in axialer Erstreckung der Sensoreinheit (3) von einer ersten Verriegelungsposition (12) in eine zweite Verriegelungsposition (13) zulässt, wobei die Sensoreinheit (3) zusammen mit der Überwurfkappe (7) durch Druckbeaufschlagung in axialer Erstreckungsrichtung der Sensoreinheit (3) bewegt werden kann, sodass das Zapfenelement (9) in der ersten Verriegelungsposition (12) angeordnet ist, wenn eine Druckbeaufschlagung durch das Medium in dem Messvolumen (4) vorliegt.

## Beschreibung

Die Erfindung geht aus von einer Messanordnung umfassend eine Sensoreinheit, ein Messvolumen mit einer Wandung und ein Montagesystem, wobei die Sensoreinheit mittels des Montagesystems an dem Messvolumen befestigt ist, wobei die Sensoreinheit die Wandung des Messvolumens durchdringt, sodass die Sensoreinheit zumindest teilweise im Innenraum des Messvolumens angeordnet ist, wobei das Montagesystem wenigstens einen Montageadapter und eine Überwurfkappe umfasst, wobei der Montageadapter fest, insbesondere ortsfest, in der Wandung des Messvolumens angeordnet ist, wobei die Sensoreinheit beweglich in dem Montageadapter angeordnet ist, wobei die Überwurfkappe mit der Sensoreinheit verbunden ist, und wobei die Sensoreinheit durch die Verbindung der Überwurfkappe mit dem Montageadapter in dem Montageadapter gehalten wird.

Zudem betrifft die Erfindung ein Montagesystem zur Anbindung einer Sensoreinheit an ein Messvolumen, umfassend wenigstens einen Montageadapter und wenigstens eine Überwurfkappe und ein Verfahren zur Druckmessung in einem Messvolumen.

Insbesondere pH- oder ORP-Sensoren mit Kunststoffgehäusen werden aus Kostengründen meist direkt an druckbeaufschlagten Rohrleitungen montiert. Hierzu werden konische 3/4 oder 1" NPT-Gewinde verwendet, die im vorderen Bereich des Sensorgehäuses integriert sind. An der Rohrleitung sind entsprechende Anschlussstutzen mit Innengewinde vorhanden, in die Sensorgehäuse eingeschraubt werden.

Alternativ zu den Außengewinden am Sensorgehäuse werden einfache Zwischenadapter verwendet, die an einem 1 oder 1,5" NPT-Gewinde der Rohrleitung montiert werden können und dann einen Einstecksensor aufnehmen (Twist-Lock Systeme). Der Sensor wird durch eine Drehbewegung, insbesondere eine Vierteldrehung in die Messposition bewegt und durch zwei am Sensor vorhandene Raststifte gehalten. Meist ist noch ein zusätzlicher Sicherungsstift vorhanden, der ein unbeabsichtigtes Lösen durch Vibrationen verhindern soll.

Ebenfalls bekannt sind Systeme mit Überwurfmuttern, die einen Anschweißadapter oder einen Gewindeadapter erfordern. Hier wird ebenfalls ein Einstecksensor verwendet, der über Stifte oder einen Flansch von der Überwurfmutter gehalten wird. Je nach Ausführung des Gewindes sind ca. vier bis zehn Umdrehungen der Mutter bis zur Dichtigkeit des Systems erforderlich.

Bei dem Versuch einen direkt montierten Sensor aus einer versehentlich noch unter Druck stehenden Rohrleitung auszubauen, besteht für den Anwender eine erhebliche Verletzungsgefahr durch Kontakt mit dem austretenden Messmedium. Eine Gefahr liegt insbesondere vor, wenn in der Rohrleitung ein Druck von zum Beispiel 10 bar herrscht und/oder eine Temperatur von über 50°C vorliegt und/oder toxische, keimbelastete oder saure oder basische Medien transportiert werden.

Beim Herausschrauben von direkt montierten NPT-Sensoren strömt bei anliegendem Prozessdruck das Messmedium am Gewinde vorbei genau in den Bereich, in dem der Anwender seine Hand bzw. das Werkzeug hält. Er kann auch direkt im Gesicht und Oberkörper getroffen werden. Es ist dann kaum möglich, den Sensor wieder festzuschrauben und damit das Leck abzudichten. Größere Mengen Messmedium können unkontrolliert austreten.

Zudem kann ein Sensor mit Kunststoffgehäuse nur mit relativ geringem Anzugsmoment mit der Leitung verschraubt werden, da bei der Verwendung von Werkzeugen Bruchgefahr bei der Glaselektrode besteht. Es ist daher möglich, dass durch Vibrationen, in Verbindung mit dem Leitungsdruck, im Laufe der Zeit eine Leckage mit Medienaustritt am Gewinde entsteht. Mögliche Montagefehler führen zum gleichen Problem.

Bei einem Twist-Lock-System kann nach dem Entfernen des Sicherungsstiftes der Sensor in die Ausbauposition gedreht und von dort durch den Leitungsdruck komplett herausgeschleudert werden. Das Messmedium strömt dann unkontrolliert aus einer ca. 25 mm großen Öffnung aus, mit hohem Verletzungsrisiko für den Anwender.

Bei Systemen mit Überwurfmutter tritt das Messmedium nach Lösen der Überwurfmutter an verschiedenen Stellen aus, unter anderem in Richtung des Anwenders im Bereich zwischen Überwurfmutter und Sensor. Ein Wiederanziehen der Mutter ist dann kaum möglich, zumindest erheblich erschwert. Es ist weiter möglich, dass sich die Überwurfmutter bei Systemen mit groben Gewinden durch Vibrationen löst. Dabei ermöglicht das grobe Gewinde nach Versagen der Dichtfunktion den Austritt einer erheblichen Menge des Messmediums. Bei unbemerktem Austritt über längere Zeit kann das zu erheblichen Schäden führen.

Auch die Montage der unterschiedlichen Verbindungssysteme weist verschiedene Nachteile auf.

Bei der Montage von direkt montierten Sensoren mit 3/4 oder 1" NPT-Gewinden muss der Sensor mit ca. drei bis fünf vollen Umdrehungen eingeschraubt werden, bis der Gewindeanschluss dicht ist. Ein am Sensor fest montiertes Kabel wird dabei stark verdrillt, was im ungünstigsten Fall zu Kontaktproblemen oder Kabelbruch führen kann. Bei Steckkopfsensoren muss beim Ausbau zur regelmäßigen Reinigung und/oder Kalibrierung der Stecker gelöst und zur Kalibrierung wieder montiert werden. Nach erfolgter Kalibrierung wird der Stecker wieder abgezogen, der Sensor verschraubt und der Stecker wieder montiert. Das führt zu hohem Verschleiß der Steckkontakte und in der Folge zu einem instabilen oder fehlerhaften Messsignal. Zudem muss das NPT-Gewinde bei jeder Montage neu abgedichtet werden. Gängige Praxis ist die Verwendung von flüssigem Dichtmittel und/oder Teflonband. Zum Erreichen eines sicheren Dichtergebnisses ist es erforderlich, Reste des alten Dichtmittels bzw. Teflonbands vor dem Auftragen des neuen Dichtmaterials zu entfernen.

Twist-Lock Systeme sind komfortabel in der Handhabung, da der Einstecksensor nur ca. 90° gedreht wird. Hier kann der Adapter selbst auch mit deutlich höherem Anzugsmoment beim NPT-Gewinde installiert werden, als es bei der Gewindemontage eines Sensors mit Kunststoffgehäuse möglich wäre.

Bei Systemen mit Überwurfmutter wird der Einstecksensor ohne Drehung im Adapter montiert. Bei Systemen mit relativ groben Gewinden sind dann mindestens drei bis vier Umdrehungen der Überwurfmutter erforderlich. Bei Systemen mit Feingewinde sind mehr als vier, beispielsweise fünf bis zehn Umdrehungen der Überwurfmutter erforderlich.

Ausgehend von dem dargelegten Stand der Technik liegt der vorliegenden Erfindung die Aufgabe zugrunde, eine Messanordnung und ein Montagesystem anzugeben, wobei die Messanordnung bzw. das Montagesystem komfortabel zu handhaben ist und wobei die Messanordnung bzw. das Montagesystem einen sicheren Ein- und Ausbau der Sensoreinheit gewährleistet. Darüber hinaus ist es Aufgabe der Erfindung, ein Verfahren zur Druckmessung in einem Messvolumen anzugeben.

Gemäß einer ersten Lehre wird die zuvor genannte Aufgabe durch eine eingangs beschriebene Messanordnung dadurch gelöst, dass wenigstens ein Zapfenelement vorhanden ist,
dass wenigstens eine Ausnehmung mit einer Führungskontur zur Aufnahme und Führung des wenigstens einen Zapfenelementes vorhanden ist,
dass die Position des Zapfenelementes in der Führungskontur durch wenigstens eine Drehbewegung der Überwurfkappe und/oder durch wenigstens eine Steckbewegung der Überwurfkappe in oder entgegen der Einsteckrichtung der Sensoreinheit verstellbar ist,
dass die Führungskontur eine Bewegung der Sensoreinheit mit der Überwurfkappe in axialer Erstreckung der Sensoreinheit von einer ersten Verriegelungsposition in eine zweite Verriegelungsposition zulässt, wobei die Sensoreinheit zusammen mit der Überwurfkappe durch Druckbeaufschlagung in axialer Erstreckungsrichtung der Sensoreinheit bewegt werden kann,
sodass das Zapfenelement in der ersten Verriegelungsposition angeordnet ist, wenn eine Druckbeaufschlagung durch das Medium in dem Messvolumen vorliegt.

Das Zapfenelement kann in der zweiten Verriegelungsposition angeordnet sein, wenn keine Druckbeaufschlagung durch das Medium in dem Messvolumen vorliegt.

Besonders bevorzugt ist die Sensoreinheit ein pH-Sensor oder ein ORP-Sensor.

Gemäß einer Ausgestaltung umfasst die Sensoreinheit einen Sensoradapter, mit dem der Sensor in dem Montageadapter angeordnet ist. Gemäß dieser Ausgestaltung ist der Sensoradapter in dem Montageadapter angeordnet und der Sensor bzw. das Sensorgehäuse ist in dem Sensoradapter angeordnet, beispielsweise eingeschraubt. In diesem Fall ist vorzugsweise der Sensoradapter mit der Überwurfkappe verbunden.

Gemäß einer bevorzugten Ausgestaltung ist das wenigstens eine Zapfenelement an dem Montageadapter angeordnet und die wenigstens eine Ausnehmung ist an der Überwurfkappe angeordnet.

Gemäß einer alternativen Ausgestaltung ist das wenigstens eine Zapfenelement an der Innenseite der Überwurfkappe angeordnet und die wenigstens eine Ausnehmung ist an dem Montageadapter angeordnet.

Zudem ist es besonders bevorzugt, wenn wenigstens zwei Zapfenelemente und wenigstens zwei Ausnehmungen mit jeweils einer Führungskontur zur Aufnahme eines Zapfenelementes vorhanden sind. Dabei sind die Zapfenelemente bzw. die Ausnehmungen einander gegenüberliegend angeordnet, wodurch insbesondere die Anbindung der Sensoreinheit an den Montageadapter verbessert wird.

Erfindungsgemäß ist also im Montagezustand der Sensoreinheit, beispielsweise durch die Position des Zapfenelementes von außen ablesbar, ob eine Druckbeaufschlagung der Sensoreinheit durch das Medium in dem Messvolumen vorhanden ist und damit insbesondere, ob ein Überdruck in dem Messvolumen vorliegt.

Besonders bevorzugt ist ein Anzeigeelement vorhanden, über das abgelesen werden kann, ob ein Überdruck in dem Messvolumen vorliegt. Beispielsweise kann das Anzeigeelement als Farbelement, insbesondere als Farbring, ausgebildet sein, wobei der Farbring derart vorzugsweise an dem Montageadapter angeordnet ist, dass er nur, wenn das Zapfenelement in der ersten Verriegelungsposition angeordnet ist, sichtbar ist.

Es wurde erkannt, dass mittels der erfindungsgemäßen Ausgestaltung der Führungskontur ein Verbindungsmechanismus zwischen der Überwurfkappe und dem Montageadapter mit einem Mechanismus zur Druckkontrolle in dem Messvolumen kombiniert werden kann. Insofern kann, insbesondere bevor die Sensoreinheit ausgebaut wird, überprüft werden, ob eine Druckbeaufschlagung durch das Medium im Messvolumen bzw. ein Überdruck im Messvolumen vorliegt. Sofern festgestellt wird, dass eine relevante Druckbeaufschlagung vorliegt, kann der Druck aus dem Messvolumen zunächst abgelassen werden, bevor die Sensoreinheit ausgebaut wird.

Dabei ist die Sensoreinheit mit der Überwurfkappe vorzugsweise form- und/oder kraftschlüssig beispielsweise mittels Anschlagflächen oder mittels einer Rastverbindung verbunden, sodass die Überwurfkappe gemeinsam mit der Sensoreinheit in dem Montageadapter entsprechend der Führungskontur der Überwurfkappe in bzw. entgegen der Einsteckrichtung der Sensoreinheit bewegbar ist.

Die oben dargelegten Nachteile in Bezug auf die Gefahr, dass bei dem Ausbau der Sensoreinheit das Medium ungewollt aus dem Messvolumen austreten kann, können somit mittels der erfindungsgemäßen Messanordnung ausgeschlossen werden.

Darüber hinaus kann die Sensoreinheit mittels des Montagesystems auch besonders einfach montiert, d.h. ein- und ausgebaut werden, wie weiter unten näher ausgeführt wird.

Gemäß einer bevorzugten Ausgestaltung ist das Messvolumen als Rohrleitung ausgebildet. Es kann darüber hinaus ebenfalls als Behälter ausgestaltet sein.

Besonders bevorzugt ist die Ausnehmung als Nut oder als Schlitz ausgebildet. Dabei ist die Breite der Ausnehmung vorzugsweise geringfügig breiter als das Zapfenelement, sodass sie als Führungskontur für das Zapfenelement ausgebildet ist.

Erfindungsgemäß sind die erste Verriegelungsposition und die zweite Verriegelungsposition der Führungskontur derart angeordnet, dass im Montagezustand die Überwurfkappe zusammen mit der Sensoreinheit durch eine Druckbeaufschlagung durch das Medium im Messvolumen aus dem Montageadapter herausgeschoben wird, sodass das Zapfenelement von der zweiten Verriegelungsposition in die erste Verriegelungsposition geführt wird. Dies ist insbesondere der Fall, wenn Überdruck in dem Messvolumen vorhanden ist.

Wenn es heißt, dass das Zapfenelement von der zweiten Verriegelungsposition in die erste Verriegelungsposition geführt wird, so ist damit unabhängig davon, ob sich die Führungskontur um ein ortsfestes Zapfenelement oder ein Zapfenelement in einer ortsfesten Führungskontur bewegt, die Änderung der Lage des Zapfenelementes im Messbereich gemeint.

Im Rahmen der vorliegenden Erfindung wird unter einem Überdruck ein Druck, der größer als der Umgebungsdruck, insbesondere mehr als 1 bar beträgt, verstanden.

Besonders bevorzugt ist ein Rückstellelement, insbesondere ein Federelement, vorhanden, das durch Rückstellkraft gewährleistet, dass die Überwurfkappe in die zweite Verriegelungsposition gelangt, wenn keine Druckbeaufschlagung durch das Medium im Messvolumen vorliegt.

Gemäß einer alternativen Ausgestaltung wird die Überwurfkappe zusammen mit der Sensoreinheit in der ersten Verriegelungsposition durch wenigstens ein Halteelement gehalten, wenn eine vorhandene Druckbeaufschlagung nachlässt. Gemäß dieser Ausgestaltung kann von außen abgelesen werden, ob zumindest zeitweise eine Druckbeaufschlagung durch das Medium im Messvolumen vorgelegen hat.

Vorzugsweise ist das wenigstens eine Halteelement als Dichtungsring ausgebildet. Der Montageadapter weist hierzu vorzugsweise an der Innenseite wenigstens eine Nut auf, wobei der Dichtungsring als Halteelement in der Nut angeordnet ist und die Überwurfkappe zusammen mit der Sensoreinheit durch Reibungskraft in der ersten Verriegelungsposition hält, wenn die Druckbeaufschlagung durch das Medium nachlässt.

Gemäß einer besonders bevorzugten Ausgestaltung ist der Montageadapter als Einschraubadapter ausgebildet und das Messvolumen weist ein Anschlusselement mit einem Gewinde auf. Der Montageadapter kann so in vorteilhafter Weise in das Anschlusselement eingeschraubt werden. Alternativ kann der Montageadapter auch als Anschweißadapter ausgebildet sein oder der Montageadapter kann über eine Flanschverbindung an dem Messvolumen befestigt sein.

Ist die Sensoreinheit als Einstecksensor ausgebildet, kann sie einfach und austauschbar nach der Montage des Montageadapters in den Montageadapter eingesteckt werden. Gemäß dieser Ausgestaltung wird der Montageadapter einmalig mit dem Anschlusselement vor dem Einbau der Sensoreinheit verbunden. Er muss zur Demontage der Sensoreinheit, beispielsweise zur Kalibration der Sensoreinheit, nicht ausgebaut werden.

Durch den erfindungsgemäßen Mechanismus der Verbindung zwischen dem Montageadapter und der Überwurfkappe kann darüber hinaus die Sensoreinheit besonders unkompliziert montiert werden. Insbesondere muss die Sensoreinheit nicht verschraubt werden, was sich negativ auf die Verkabelung der Sensoreinheit auswirken würde. Im einfachsten Fall kann die Sensoreinheit wie zuvor beschrieben einfach in den Montageadapter eingesteckt werden. Die Verbindung der Überwurfkappe mit dem Montageadapter erfolgt gemäß der Führungskontur durch eine kombinierte Steck- und Drehbewegung der Überwurfkappe. Vorzugsweise wird die Überwurfkappe um einen Winkel zwischen 40° und 140°, besonders bevorzugt um einen Winkel von ca. 60° oder von ca. 90° gedreht. Dies ist besonders komfortabel in der Handhabung.

Gemäß einer besonders bevorzugten Ausgestaltung ist die wenigstens eine Führungskontur derart ausgebildet, dass sie eine Kombination aus wenigstens zwei zur Einsteckrichtung der Sensoreinheit senkrecht orientierten Drehbewegungen der Überwurfkappe und wenigstens zwei Steckbewegungen der Überwurfkappe in oder entgegen der Einsteckrichtung der Sensoreinheit erlaubt. Gemäß dieser Ausgestaltung ist die Führungskontur als zweistufiger Bajonett-Verschluss ausgebildet mit der zusätzlichen Option, dass vorzugsweise anhand der Position des wenigstens einen Zapfenelementes abgelesen werden kann, ob in dem Messvolumen ein erhöhter Druck vorliegt.

Besonders bevorzugt ist die erste Verriegelungsposition und/oder die zweite Verriegelungsposition der Führungskontur derart ausgebildet, dass wenn das Zapfenelement in der ersten Verriegelungsposition oder in der zweiten Verriegelungsposition der Führungskontur angeordnet ist, die Überwurfkappe gegen ein Verdrehen verriegelt ist. Besonders bevorzugt ist die erste Verriegelungsposition und/oder die zweite Verriegelungsposition als Formschluss in Drehrichtung der Überwurfkappe ausgebildet. Hierzu ist die erste Position und/oder die zweite Position als Kuhle der Führungskontur ausgebildet, die das aufgenommene Zapfenelement teilweise umschließt..

Gemäß einer weiteren Ausgestaltung weist die Führungskontur wenigstens einen Servicebereich und einen Messbereich auf, wobei die Sensoreinheit ein- und ausgebaut werden kann, wenn das Zapfenelement im Servicebereich angeordnet ist, und wobei die Sensoreinheit an dem Messvolumen gehalten wird, wenn das Zapfenelement im Messbereich angeordnet ist.

Besonders bevorzugt gelangt das Zapfenelement ausgehend von dem Servicebereich in den Messbereich durch wenigstens eine Steckbewegung der Überwurfkappe in Einsteckrichtung der Sensoreinheit und durch wenigstens eine Drehbewegung senkrecht zur Einsteckrichtung der Sensoreinheit.

Ebenfalls bevorzugt gelangt das Zapfenelement ausgehend von dem Servicebereich in den Messbereich durch eine Kombination aus einer ersten Steckbewegung der Überwurfkappe in Einsteckrichtung, einer ersten Drehbewegung der Überwurfkappe, einer zweiten Steckbewegung der Überwurfkappe in Einsteckrichtung der Sensoreinheit und einer zweiten Drehbewegung senkrecht zur Einsteckrichtung der Sensoreinheit.

Besonders bevorzugt sind die erste Verriegelungsposition und/oder die zweite Verriegelungsposition im Messbereich angeordnet.

Gemäß einer ebenfalls bevorzugten Ausgestaltung sind die erste und die zweite Verriegelungsposition dabei in Steckrichtung der Sensoreinheit hintereinander angeordnet. Liegt also im Betrieb ein Überdruck in dem Messvolumen vor, wird die Sensoreinheit zusammen mit der Überwurfkappe aus dem Montageadapter eine geringe Strecke, beispielsweise einige Millimeter, herausgeschoben. Die Überwurfkappe bewegt sich mit der Sensoreinheit, sodass das Zapfenelement in der Führungskontur im Messbereich in die erste Verriegelungsposition geführt wird.

Gemäß einer weiteren Ausgestaltung weist die Führungskontur einen Zwischenbereich auf, wobei der Zwischenbereich in Drehrichtung der Überwurfkappe zwischen dem Messbereich und dem Servicebereich angeordnet ist und wobei vorzugsweise im Zwischenbereich eine dritte Verriegelungsposition vorhanden ist, in die das Zapfenelement geführt wird, wenn eine Druckbeaufschlagung durch das Medium in dem Messvolumen vorhanden ist. Dieser Zwischenbereich mit der dritten Verriegelungsposition dient als zusätzliche Sicherung gegen ein unbeabsichtigtes Lösen der Sensoreinheit, wenn ein Überdruck in dem Messvolumen vorliegt. Wird die Überwurfkappe im Betrieb von dem Messbereich versehentlich in Richtung des Servicebereichs gedreht, wird das wenigstens eine Zapfenelement im Zwischenbereich in die dritte Verriegelungsposition geführt, wodurch ein Weiterdrehen der Überwurfkappe verhindert wird. Auch die dritte Verriegelungsposition ist vorzugsweise als Formschluss gegen ein Verdrehen der Überwurfkappe ausgebildet. Die dritte Verriegelungsposition ist also besonders bevorzugt als Kuhle im Verlauf der Führungskontur ausgebildet, in die das Zapfenelement bei Vorliegen von Überdruck in dem Messvolumen geführt wird, wenn das Zapfenelement im Zwischenbereich angeordnet ist.

Liegt im Betrieb eine Druckbeaufschlagung durch das Medium im Messvolumen vor, so kann die Überwurfkappe nur unter aktiver Überwindung des Gegendrucks von dem Messbereich in den Servicebereich gebracht und damit die Sensoreinheit ausgebaut werden. Aufgrund des Gegendrucks reibt das Zapfenelement während des Drehens der Überwurfkappe gegen die Randbereiche der Führungskontur. Gemäß einer Ausgestaltung sind die Randbereiche der Führungskontur daher strukturiert ausgebildet, sodass der Anwender bei Drehen der Überwurfkappe auch haptisch wahrnimmt, dass eine Druckbeaufschlagung durch das Medium in dem Messvolumen vorhanden ist.

Zur Abdichtung der Verbindung zwischen der Überwurfkappe und der Sensoreinheit weist die Überwurfkappe gemäß einer weiteren bevorzugten Ausgestaltung wenigstens eine innen liegende Nut, in der ein Dichtungsring angeordnet ist, auf.

Weiter bevorzugt weist der Montageadapter wenigstens eine innen liegende Nut auf, in der ein Dichtungsring zur Abdichtung des Bereichs zwischen dem Montageadapter und der Sensoreinheit angeordnet ist. Der Dichtungsring kann gleichzeitig die oben beschriebene Funktion eines Halteelementes erfüllen, das die Kombination aus der Sensoreinheit und der Überwurfkappe in der ersten Verriegelungsposition hält, wenn eine Druckbeaufschlagung nachlässt.

Gemäß einer weiteren Ausgestaltung können auch zwei oder mehr innen liegende Nuten vorhanden sein, in denen jeweils ein Dichtungsring angeordnet ist, der sowohl der Abdichtung dient als auch die Funktion eines Halteelementes erfüllt.

Gemäß einer zweiten Lehre der vorliegenden Erfindung wird die eingangs genannte Aufgabe durch ein eingangs beschriebenes Montagesystem dadurch gelöst, dass das Montagesystem zur Herstellung einer der zuvor beschriebenen Messanordnungen ausgebildet ist. Im Detail weist das Montagesystem eines oder mehrere der zuvor beschriebenen Merkmale auf.

Gemäß einer dritten Lehre der vorliegenden Erfindung wird die eingangs dargelegte Aufgabe durch ein eingangs beschriebenes Verfahren zur Druckmessung dadurch gelöst, dass das Zapfenelement durch Drücken der Überwurfkappe, vorzugsweise von der ersten Verriegelungsposition, in die zweite Verriegelungsposition gebracht wird, sodass das Zapfenelement durch eine Druckbeaufschlagung durch das Medium in dem Messvolumen in die erste Verriegelungsposition geführt wird, oder sodass das Zapfenelement in der zweiten Verriegelungsposition verbleibt, wenn keine Druckbeaufschlagung vorliegt.

Im Rahmen der vorliegenden Erfindung können keine Absolutwerte für den Druck im Messvolumen ermittelt werden, jedoch kann insbesondere durch Wahrnehmung des Kraftaufwandes, mit dem die Überwurfkappe bewegt wird, zumindest erfasst werden, ob viel oder wenig Überdruck in dem Messvolumen vorhanden ist.

Weiterhin kann zur Überprüfung, ob eine geringe Druckbeaufschlagung vorliegt, die Überwurfkappe einige Male von der ersten Verriegelungsposition in die zweite Verriegelungsposition bewegt werden, wobei bei einer geringen Druckbeaufschlagung in dem Messvolumen die Bewegung der Überwurfkappe in Einsteckrichtung der Sensoreinheit höhere Kräfte erfordert als die Bewegung entgegen der Einsteckrichtung.

Gemäß einer weiteren Ausgestaltung des Verfahrens, wobei die Führungskontur wenigstens einen Servicebereich, in der die Sensoreinheit ein- und ausgebaut werden kann, einen Messbereich, in der die Sensoreinheit an dem Messvolumen gehalten ist, und einen Zwischenbereich aufweist, wobei der Zwischenbereich in Drehrichtung der Überwurfkappe zwischen dem Messbereich und dem Servicebereich angeordnet ist, wobei die erste Verriegelungsposition und/oder die zweite Verriegelungsposition im Messbereich angeordnet sind, und wobei im Zwischenbereich eine dritte Verriegelungsposition vorhanden ist, wobei wenn die Überwurfkappe aktiv vom Messbereich in den Servicebereich gedreht wird, wird das Zapfenelement in die dritte Verriegelungsposition geführt, wenn eine Druckbeaufschlagung durch das Medium in dem Messvolumen vorhanden ist, sodass ein weiteres Drehen der Überwurfkappe nur durch aktives Drücken der Überwurfkappe entgegen der Druckbeaufschlagung erfolgen kann.

Es gibt nun eine Vielzahl von Möglichkeiten die erfindungsgemäße Messanordnung, das erfindungsgemäße Montagesystem und das erfindungsgemäße Verfahren auszugestalten und weiterzubilden. Verwiesen wird dazu auf die den unabhängigen Ansprüchen nachgeordneten Patentansprüche sowie auf die nachfolgenden Ausführungsbeispiele zusammen mit der Zeichnung.

In der Zeichnung zeigen:
- Fig. 1: ein erstes Ausführungsbeispiel einer Messanordnung und eines Montagesystems, wobei das Zapfenelement im Servicebereich angeordnet ist,
- Fig. 2: ein Ausführungsbeispiel der Messanordnung und des Montagesystems im Längsschnitt,
- Fig. 3: ein weiteres Ausführungsbeispiel einer Messanordnung,
- Fig. 4: das erste Ausführungsbeispiel der Messanordnung und des Montagesystems, wobei das Zapfenelement in der zweiten Verriegelungsposition angeordnet ist,
- Fig. 5: das in Fig. 4 dargestellte Ausführungsbeispiel im Längsschnitt,
- Fig. 6: das erste Ausführungsführungsbeispiel einer Messanordnung und eines Montagesystems, wobei das Zapfenelement in der ersten Verriegelungsposition angeordnet ist,
- Fig. 7: das in Fig. 6 dargestellt Ausführungsbeispiel im Längsschnitt,
- Fig. 8: das Ergebnis einer Druckkontrolle, wenn Überdruck in dem Messvolumen vorhanden ist,
- Fig. 9: das Ergebnis einer Druckkontrolle, wenn kein Überdruck in dem Messvolumen vorhanden ist,
- Fig. 10: den Bewegungsvorgang, um die Überwurfkappe von dem Messbereich in den Servicebereich zu bewegen,
- Fig. 11: das Ausführungsbeispiel der Messanordnung und des Montagesystems, wenn das Zapfenelement in der dritten Verriegelungsposition angeordnet ist und
- Fig. 12: ein erstes Ausführungsbeispiel eines erfindungsgemäßen Verfahrens.

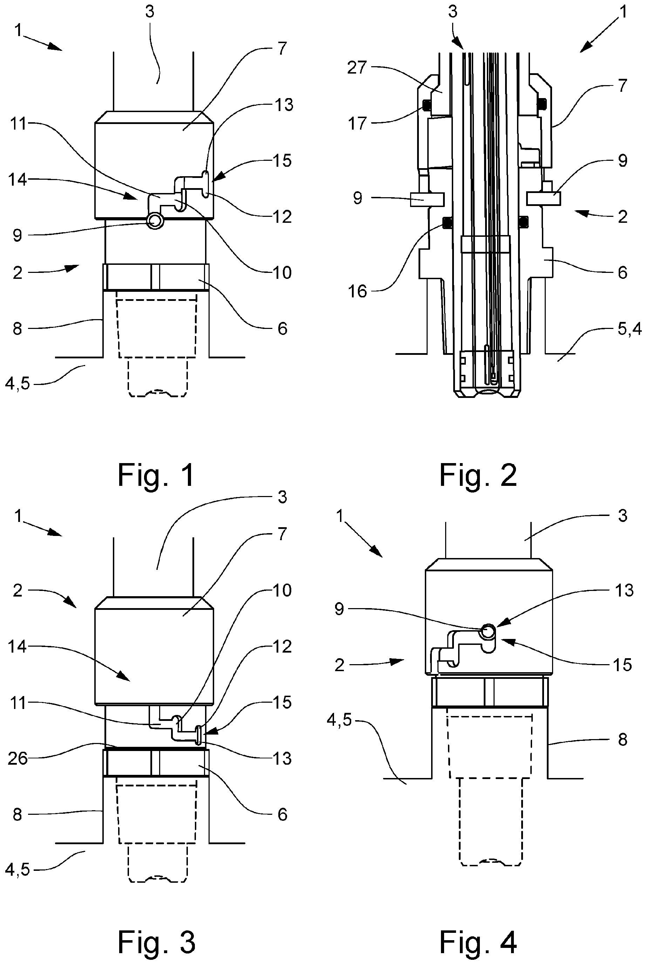

Fig. 1 zeigt ein erstes Ausführungsbeispiel einer Messanordnung 1, umfassend ein Montagesystem 2, eine Sensoreinheit 3 und ein Messvolumen 4 in Form einer Rohrleitung 5. Die Sensoreinheit 3 ist mittels des Montagesystems 2 an der Rohrleitung 5 befestigt, sodass die Sensoreinheit 3 zumindest teilweise im Innenraum der Rohrleitung 5 angeordnet ist. Das Montagesystem 2 umfasst einen Montageadapter 6 und eine Überwurfkappe 7, wobei die Sensoreinheit 3 in dem Montageadapter 6 angeordnet ist und wobei der Montageadapter 6 mit dem Anschlusselement 8 der Rohrleitung 5 fest verbunden ist.

Im dargestellten Ausführungsbeispiel weist das Anschlusselement 8 ein Gewinde auf, und der Montageadapter 6 ist als Einschraubadapter ausgebildet. Das Anschlusselement kann in einer anderen Ausgestaltung auch einen weiteren Zwischenadapter umfassen, sofern ein Anpassung an den Durchmesser des Anschlusselementes erforderlich ist. Die Sensoreinheit 3 ist als Einstecksensor ausgebildet, die in den Montageadapter 6 eingesteckt ist, sodass die Sensoreinheit 3 bewegbar in dem Montageadapter 6 angeordnet ist.

Die Überwurfkappe 7 ist zur Anbindung an den Montageadapter 6 ausgebildet. Hierzu weist der Montageadapter 6 ein Zapfenelement 9 und die Überwurfkappe 7 weist eine Ausnehmung 10 mit einer Führungskontur 11 zur Aufnahme des Zapfenelementes 9 auf. Die Ausnehmung 10 ist im dargestellten Ausführungsbeispiel als Schlitz ausgebildet. Die Position des Zapfenelementes 9 in der Führungskontur 11 kann durch wenigstens eine Drehbewegung und durch wenigstens eine Steckbewegung der Überwurfkappe 7 in oder entgegen der Einsteckrichtung der Sensoreinheit 3 verändert werden. Insgesamt weist die Führungskontur 11 die Form eines zweistufigen Bajonettverschlusses auf, sodass die Überwurfkappe 7 mit dem Montageadapter 6 über diesen Bajonettverschluss verbunden werden kann und so die Sensoreinheit 3 in dem Montageadapter 6 gehalten wird.

Zur Verriegelung gegen ein Verdrehen der Überwurfkappe 7 weist die Führungskontur 11 eine erste Verriegelungsposition 12 auf, wobei das Zapfenelement 9 im Betrieb in die erste Verriegelungsposition 12 geführt wird, wenn Überdruck in der Rohrleitung 5 vorhanden ist. Weiterhin weist die Führungskontur eine zweite Verriegelungsposition 13 auf, wobei das Zapfenelement 9 im Betrieb in die zweite Verriegelungsposition 13 geführt werden kann, wenn in der Rohrleitung 5 kein Überdruck vorhanden ist. Dies kann durch eine Rückstellkraft automatisch erfolgen, wenn ein vorhandener Überdruck nachlässt. Alternativ kann in dieser Situation die Überwurfkappe 7 zusammen mit der Sensoreinheit 3 durch ein Halteelement zunächst in der ersten Verriegelungsposition gehalten werden, sodass die Überführung in die zweite Verriegelungsposition aktiv durch den Nutzer erfolgt.

Die erste Verriegelungsposition 12 und die zweite Verriegelungsposition 13 sind beide als Formschluss in Drehrichtung der Überwurfkappe 7 ausgebildet, sodass ein versehentliches Öffnen der Verbindung der Überwurfkappe 7 mit dem Montageadapter 6 beispielsweise durch Vibration verhindert ist.

Zudem weist die Führungskontur 11 einen Servicebereich 14, wobei die Sensoreinheit 3 ein- oder ausgebaut werden kann, wenn das Zapfenelement 9 im Servicebereich 14 angeordnet ist und einen Messbereich 15 auf, wobei die Sensoreinheit 3 an der Rohrleitung 5 gehalten wird, wenn das Zapfenelement 9 im Messbereich 15 angeordnet ist.

Im dargestellten Ausführungsbeispiel ist das Zapfenelement 9 im Servicebereich 14 angeordnet, das Ausführungsbeispiel zeigt also die Situation, in der in die Sensoreinheit 3 an die Rohrleitung 5 angebunden wird.

Fig. 2 zeigt ein Ausführungsbeispiel der Messanordnung 1 und des Montagesystems 2 im Längsschnitt. Zu sehen ist, dass der Montageadapter 6 zwei Zapfenelemente 9 aufweist, die einander gegenüberliegend angeordnet sind. Dementsprechend weist die Überwurfkappe 7 zwei Ausnehmungen 10 mit Führungskontur 11 auf, wobei jeweils eine Ausnehmung 10 bzw. eine Führungskontur 11 zur Aufnahme eines Zapfenelementes 9 ausgebildet ist. Die Sensoreinheit 3 umfasst im dargestellten Ausführungsbeispiel einen zusätzlichen Sensoradapter 27. Der Sensor bzw. das Sensorgehäuse ist im dargestellten Ausführungsbeispiel in den Sensoradapter 27 eingeschraubt und der Sensoradapter 27 ist in den Montageadapter 6 eingesteckt.

Zwischen dem Montageadapter 6 und der Sensoreinheit 3 ist ein Dichtungsring 16 zur Abdichtung angeordnet. Zudem ist zwischen der Überwurfkappe 7 und der Sensoreinheit 3 ein weiterer Dichtungsring 17 zur Abdichtung angeordnet. Der Dichtungsring 16 hat außerdem die Funktion die Überwurfkappe 7 zusammen mit der Sensoreinheit 3 in der ersten Verriegelungsposition 12 zu halten, wenn nur zeitweise Überdruck in dem Messvolumen anliegt. Gemäß dem dargestellten Ausführungsbeispiel verbleibt die Kombination aus der Überwurfkappe 7 und der Sensoreinheit 3 in der ersten Verriegelungsposition 12, wenn ein in dem Messvolumen vorhandener Überdruck sich abbaut.

Fig. 3 zeigt ein Ausführungsbeispiel einer Messanordnung 1 umfassend ein Montagesystem 2, eine Sensoreinheit 3 und ein Messvolumen 4, wobei im Unterschied zu dem in Fig. 1 gezeigten Ausführungsbeispiel die Ausnehmung 10 mit der Führungskontur 11 an dem Montageadapter 6 und das Zapfenelement 9 im Inneren der Überwurfkappe 7, hier also nicht sichtbar, angeordnet ist. Unter der Ausnehmung 10 ist ein Anzeigeelement 26 in Form eines Farbrings vorhanden. Dieser Farbring ist im Betrieb, d.h. wenn das Zapfenelement 9 im Messbereich 15 angeordnet ist, nur sichtbar, wenn das Zapfenelement 9 in der ersten Verriegelungsposition 12 angeordnet ist, wenn also zumindest zeitweise eine Druckbeaufschlagung durch das Medium im Messvolumen 4 vorliegt.

Fig. 4 zeigt das erste Ausführungsbeispiel der Messanordnung 1 bzw. des Montagesystems 2, wobei das Zapfenelement 9 in der zweiten Verriegelungsposition 13 im Messbereich 15 angeordnet ist. In dem dargestellten Ausführungsbeispiel liegt also kein Überdruck an der Rohrleitung 5 an. Zudem ist die Sensoreinheit 3 an der Rohrleitung 5 fixiert, da die Überwurfkappe 7 durch die formschlüssige Anbindung an den Montageadapter 6 gegen ein Verdrehen verriegelt ist.

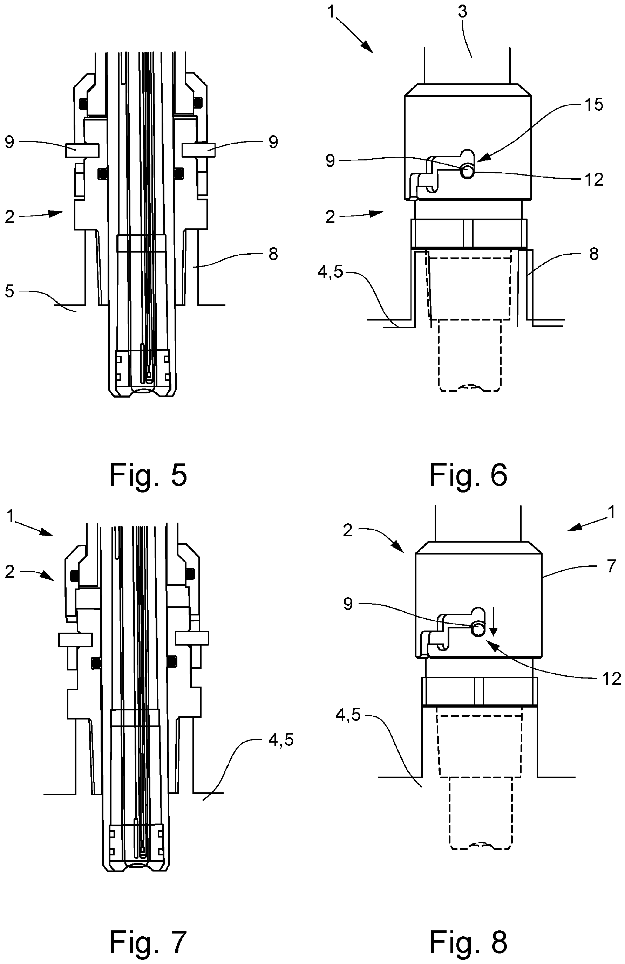

Fig. 5 zeigt die in Fig. 4 dargestellte Situation der Montage der Sensoreinheit 3 an einer Rohrleitung 5 im Längsschnitt.

Fig. 6 zeigt das erste Ausführungsführungsbeispiel der Messanordnung 1 bzw. des Montagesystems 2, wobei das Zapfenelement 9 in der ersten Verriegelungsposition 12 im Messbereich 15 angeordnet ist. In dieser Position wird die Sensoreinheit 3 mit der Überwurfkappe 7 durch den Überdruck in der Rohrleitung 5 minimal aus dem Montageadapter 6 herausgehoben, sodass das Zapfenelement 9 in die erste Verriegelungsposition 12 geführt wird. Für den Anwender ist also von außen sichtbar, dass Überdruck in der Rohrleitung 5 vorhanden ist, sodass er davor gewarnt ist, die Sensoreinheit 3 ohne Ablassen des Überdrucks aus der Leitung auszubauen.

Fig. 7 zeigt das in Fig. 6 dargestellte Ausführungsbeispiel im Längsschnitt.

Um im Betrieb festzustellen, ob ein Überdruck an der Rohrleitung 5 anliegt, kann vor dem Ausbau der Sensoreinheit 3 eine Druckkontrolle durchgeführt werden. Hierzu wird die Überwurfkappe 7 in Einsteckrichtung der Sensoreinheit 3 gedrückt, wenn das Zapfenelement 9 im Messbereich 15 angeordnet ist. Ist ein Überdruck in der Rohrleitung 5 vorhanden, so wird die Sensoreinheit 3 zusammen mit der Überwurfkappe 7 aus dem Montageadapter 6 herausgedrückt, sodass das Zapfenelement 9 in die erste Verriegelungsposition 12 geführt wird. Dies ist in Fig. 8 dargestellt.

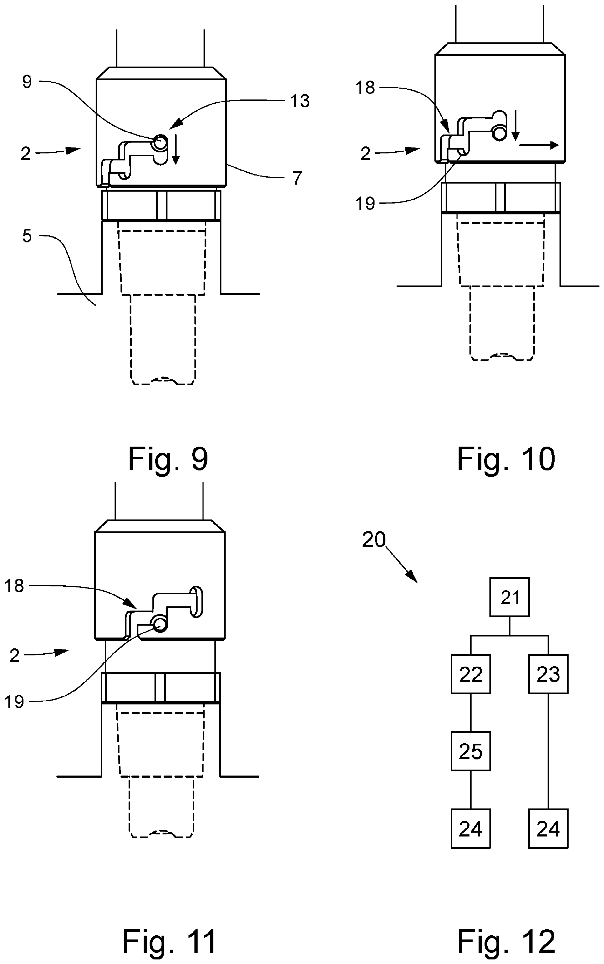

Liegt kein Überdruck in der Rohrleitung vor, so verbleibt die Überwurfkappe 7 derart, dass das Zapfenelement 9 in der zweiten Verriegelungsposition 13 angeordnet ist. Dies ist in Fig. 9 dargestellt.

Neben dem Servicebereich 14 und dem Messbereich 15 weist die Führungskontur 11 ebenfalls einen Zwischenbereich 18 auf, der in Drehrichtung der Überwurfkappe 7 zwischen dem Servicebereich 14 und dem Messbereich 15 angeordnet ist.

Fig. 10 zeigt, dass ausgehend von der ersten Verriegelungsposition 12 im Messbereich 15 der Zwischenbereich 18 dadurch erreicht wird, dass die Überwurfkappe 7 zunächst in Einsteckrichtung gedrückt und anschließend gedreht wird. Befindet sich das Zapfenelement 9 im Zwischenbereich 18 und liegt ein Überdruck an der Rohrleitung 5 an, so wird das Zapfenelement 9 in eine dritte Verriegelungsposition 19 geführt. Dies ist in Fig. 11 dargestellt. Auch die dritte Verriegelungsposition 19 ist als Formschluss in Drehrichtung der Überwurfkappe 7 ausgebildet, sodass die Überwurfkappe 7 gegen ein weiteres Verdrehen gesichert ist.

Ein versehentliches Ausbauen der Sensoreinheit 3, obwohl ein Überdruck in der Rohrleitung 5 anliegt, wird dadurch weiter verhindert. Insofern stellt der Zwischenbereich 18 mit der dritten Verriegelungsposition 19 eine weitere Sicherheit gegen das unbeabsichtigte Ausbauen der Sensoreinheit 3 bei dem Vorliegen von Überdruck in der Rohrleitung 5 dar.

Fig. 12 zeigt ein erstes Ausführungsbeispiel eines Verfahrens 20 zur Messung der Druckbeaufschlagung der Sensoreinheit 3 durch das Medium im Messvolumen 4, im Detail in der Rohrleitung 5 in einer Messanordnung 1, die wie in Fig. 1 abgebildet ist, aufgebaut ist.

In einem ersten Schritt 21 wird das Zapfenelement 9 durch Drücken der Überwurfkappe 7 von der ersten Verriegelungsposition 12 in die zweite Verriegelungsposition 13 gebracht.

Liegt eine Druckbeaufschlagung durch das Medium in der Rohrleitung 5 vor, wird das Zapfenelement 9 zurück in die erste Verriegelungsposition 12 geführt 22. Vor dem Ausbau 24 der Sensoreinheit 3 muss zunächst der Überdruck abgelassen werden 25.

Liegt kein Überdruck in der Rohrleitung vor, verbleibt 23 das Zapfenelement 9 in der zweiten Verriegelungsposition 13 und die Sensoreinheit kann ausgebaut werden 24.

In vorteilhafter Weise kann so vor dem Ausbau der Sensoreinheit 3 überprüft werden, ob ein relevanter Überdruck an der Rohrleitung anliegt, der beim Ausbau der Sensoreinheit zu einem unkontrollierten Austritt des Mediums aus der Rohrleitung führen kann.

### Bezugszeichen

- 1: Messanordnung
- 2: Montagesystem
- 3: Sensoreinheit
- 4: Messvolumen
- 5: Rohrleitung
- 6: Montageadapter
- 7: Überwurfkappe
- 8: Anschlusselement
- 9: Zapfenelement
- 10: Ausnehmung
- 11: Führungskontur
- 12: erste Verriegelungsposition
- 13: zweite Verriegelungsposition
- 14: Servicebereich
- 15: Messbereich
- 16: Dichtungsring
- 17: Dichtungsring
- 18: Zwischenbereich
- 19: dritte Verriegelungsposition
- 20: Verfahren zur Messung einer Druckbeaufschlagung
- 21: Drücken der Überwurfkappe
- 22: Überwurfkappe wird durch Überdruck entgegen der Einsteckrichtung gedrückt
- 23: Überwurfkappe verbleit in der zweiten Verriegelungsposition
- 24: Ausbau der Sensoreinheit
- 25: Ablassen von Überdruck
- 26: Anzeigeelement
- 27: Sensoradapter

## Patentansprüche

1. Messanordnung (1) umfassend eine Sensoreinheit (3), ein Messvolumen (4) mit einer Wandung und ein Montagesystem (2), wobei die Sensoreinheit (3) mittels des Montagesystems (2) an dem Messvolumen (4) befestigt ist, wobei die Sensoreinheit (3) die Wandung des Messvolumens (4) durchdringt, sodass die Sensoreinheit (3) zumindest teilweise im Innenraum des Messvolumens (4) angeordnet ist,
wobei das Montagesystem (2) wenigstens einen Montageadapter (6) und eine Überwurfkappe (7) umfasst, wobei der Montageadapter (6) fest in der Wandung des Messvolumens (4) angeordnet ist, wobei die Sensoreinheit (3) beweglich in dem Montageadapter (6) angeordnet ist,
wobei die Überwurfkappe (7) mit der Sensoreinheit (3) verbunden ist, und wobei die Sensoreinheit (3) durch die Verbindung der Überwurfkappe (7) mit dem Montageadapter (6) in dem Montageadapter (6) gehalten wird,
**dadurch gekennzeichnet,**
**dass** wenigstens ein Zapfenelement (9) vorhanden ist,
**dass** wenigstens eine Ausnehmung (10) mit einer Führungskontur (11) zur Aufnahme und Führung des wenigstens einen Zapfenelementes (9) vorhanden ist,
**dass** die Position des Zapfenelementes (9) in der Führungskontur (11) durch wenigstens eine Drehbewegung der Überwurfkappe (7) und/oder durch wenigstens eine Steckbewegung der Überwurfkappe (7) in oder entgegen der Einsteckrichtung der Sensoreinheit (3) verstellbar ist,
**dass** die Führungskontur (11) eine Bewegung der Sensoreinheit (3) mit der Überwurfkappe (7) in axialer Erstreckung der Sensoreinheit (3) von einer ersten Verriegelungsposition (12) in eine zweite Verriegelungsposition (13) zulässt, wobei die Sensoreinheit (3) zusammen mit der Überwurfkappe (7) durch Druckbeaufschlagung in axialer Erstreckungsrichtung der Sensoreinheit (3) bewegt werden kann,
sodass das Zapfenelement (9) in der ersten Verriegelungsposition (12) angeordnet ist, wenn eine Druckbeaufschlagung durch das Medium in dem Messvolumen (4) vorliegt.

2. Messanordnung nach Anspruch 1, **dadurch gekennzeichnet, dass** das wenigstens eine Zapfenelement (9) an dem Montageadapter (6) angeordnet ist und dass die wenigstens eine Ausnehmung (10) an der Überwurfkappe (7) angeordnet ist.

3. Messanordnung nach Anspruch 1, **dadurch gekennzeichnet, dass** das wenigstens eine Zapfenelement (9) an der Innenseite der Überwurfkappe (7) angeordnet ist und dass die wenigstens eine Ausnehmung (10) an dem Montageadapter (6) angeordnet ist.

4. Messanordnung nach einem der Ansprüche 1 bis 3, **dadurch gekennzeichnet, dass** wenigstens ein Rückstellelement vorhanden ist, das durch Rückstellkraft gewährleistet, dass das Zapfenelement (9) in der zweiten Verriegelungsposition (13) angeordnet ist, wenn keine Druckbeaufschlagung durch das Medium im Messvolumen vorliegt oder dass wenigstens ein Halteelement vorhanden ist, das die Überwurfkappe (7) zusammen mit der Sensoreinheit (3) in der ersten Verriegelungsposition (12) hält, wenn eine vorhandene Druckbeaufschlagung nachlässt.

5. Messanordnung (1) nach einem der Ansprüche 1 bis 4, **dadurch gekennzeichnet, dass** der Montageadapter (6) als Einschraubadapter ausgebildet ist und dass das Messvolumen (4) ein Anschlusselement (8) mit einem Gewinde aufweist oder dass der Montageadapter (6) als Anschweißadapter ausgebildet ist oder dass der Montageadapter über eine Flanschverbindung an dem Messvolumen befestigt sein.

6. Messanordnung (1) nach einem der Ansprüche 1 bis 5, **dadurch gekennzeichnet, dass** die wenigstens eine Führungskontur (11) derart ausgebildet ist, dass sie eine Kombination aus wenigstens zwei zur Einsteckrichtung der Sensoreinheit (3) senkrecht orientierten Drehbewegungen der Überwurfkappe (7) und wenigstens zwei Steckbewegungen der Überwurfkappe in oder entgegen der Einsteckrichtung der Sensoreinheit (3) erlaubt.

7. Messanordnung (1) nach einem der Ansprüche 1 bis 6, **dadurch gekennzeichnet, dass** die erste Verriegelungsposition (12) und/oder die zweite Verriegelungsposition (13) der Führungskontur (11) derart ausgebildet sind, dass wenn das Zapfenelement (9) in der ersten Verriegelungsposition (12) oder in der zweiten Verriegelungsposition (13) der Führungskontur (11) angeordnet ist, die Überwurfkappe (7) gegen ein Verdrehen verriegelt ist.

8. Messanordnung (1) nach einem der Ansprüche 1 bis 7, **dadurch gekennzeichnet, dass** die Führungskontur (11) wenigstens einen Servicebereich (14) und einen Messbereich (15) aufweist, wobei die Sensoreinheit (3) ein- und ausgebaut werden kann, wenn das Zapfenelement (9) im Servicebereich (14) angeordnet ist, und wobei die Sensoreinheit (3) an dem Messvolumen (4) gehalten wird, wenn das Zapfenelement (9) im Messbereich (15) angeordnet ist.

9. Messanordnung (1) nach einem der Ansprüche 1 bis 8, **dadurch gekennzeichnet, dass** die erste Verriegelungsposition (12) und/oder die zweite Verriegelungsposition (13) im Messbereich (15) angeordnet sind.

10. Messanordnung (1) nach Anspruch einem der Ansprüche 1 bis 9, **dadurch gekennzeichnet, dass** die erste Verriegelungsposition (12) und die zweite Verriegelungsposition (13) in der Steckrichtung der Sensoreinheit (3) hintereinander angeordnet sind.

11. Messanordnung (1) nach einem der Ansprüche 8 bis 10, **dadurch gekennzeichnet, dass** die Führungskontur (11) einen Zwischenbereich (18) aufweist, wobei der Zwischenbereich (18) in Drehrichtung der Überwurfkappe (7) zwischen dem Messbereich (15) und dem Servicebereich (14) angeordnet ist und wobei vorzugsweise im Zwischenbereich (18) eine dritte Verriegelungsposition (19) vorhanden ist, in die das Zapfenelement (9) geführt wird, wenn eine Druckbeaufschlagung durch das Medium im Messvolumen (4) vorhanden ist.

12. Messanordnung (1) nach einem der Ansprüche 1 bis 11, **dadurch gekennzeichnet, dass** die Überwurfkappe (7) wenigstens eine innen liegende Nut, in die ein Dichtungsring (17) aufgenommen ist, aufweist.

13. Messanordnung (1) nach einem der Ansprüche 1 bis 12, **dadurch gekennzeichnet, dass** der Montageadapter (6) wenigstens eine innen liegende Nut, in die ein Dichtungsring (16) aufgenommen ist, aufweist.

14. Montagesystem (2) zur Anbindung einer Sensoreinheit (3) an ein Messvolumen (4), umfassend wenigstens einen Montageadapter (6) und wenigstens eine Überwurfkappe (7),
**dadurch gekennzeichnet,**
**dass** das Montagesystem (2) zur Herstellung einer Messanordnung (1) nach einem der Ansprüche 1 bis 13 ausgebildet ist.

15. Verfahren (20) zur Druckmessung in einem Messvolumen (4) in einer Messanordnung (1) nach einem der Ansprüche 1 bis 13,
**dadurch gekennzeichnet,**
**dass** das Zapfenelement (9) durch Drücken der Überwurfkappe (7), vorzugsweise von der ersten Verriegelungsposition (12), in die zweite Verriegelungsposition (13) gebracht wird, sodass das Zapfenelement (9) durch eine Druckbeaufschlagung durch das Medium in dem Messvolumen (4) in die erste Verriegelungsposition (12) geführt wird, oder sodass das Zapfenelement (9) in der zweiten Verriegelungsposition (13) verbleibt, wenn keine Druckbeaufschlagung vorliegt.

16. Verfahren (20) nach Anspruch 15, **dadurch gekennzeichnet, dass** zur Überprüfung, ob eine geringe Druckbeaufschlagung vorliegt, die Überwurfkappe (7) einige Male von der ersten Verriegelungsposition (12) in die zweite Verriegelungsposition (13) bewegt wird, wobei bei einer geringen Druckbeaufschlagung durch das Medium in dem Messvolumen (4) die Bewegung der Überwurfkappe (7) in Einsteckrichtung der Sensoreinheit (3) höhere Kräfte erfordert als die Bewegung entgegen der Einsteckrichtung.

17. Verfahren (20) nach einem der Ansprüche 15 oder 16, **dadurch gekennzeichnet, dass** die Führungskontur (1) wenigstens einen Servicebereich (14), in der die Sensoreinheit (3) ein- und ausgebaut werden kann, einen Messbereich (15), in der die Sensoreinheit (3) an dem Messvolumen gehalten ist, und einen Zwischenbereich (18) aufweist, wobei der Zwischenbereich (18) in Drehrichtung der Überwurfkappe (7) zwischen dem Messbereich (15) und dem Servicebereich (14) angeordnet ist, wobei die erste Verriegelungsposition (12) und/oder die zweite Verriegelungsposition (13) im Messbereich (15) angeordnet sind, und wobei im Zwischenbereich (18) eine dritte Verriegelungsposition (19) vorhanden ist, wobei wenn die Überwurfkappe (7) aktiv vom Messbereich (15) in den Servicebereich (14) gedreht wird, das Zapfenelement (9) in die dritte Verriegelungsposition (19) geführt wird, wenn eine Druckbeaufschlagung durch das Medium in dem Messvolumen (4) vorhanden ist, sodass ein weiteres Drehen der Überwurfkappe (7) nur durch aktives Drücken der Überwurfkappe (7) entgegen der Druckbeaufschlagung erfolgen kann.
